# EUROPÄISCHE PATENTSCHRIFT

(11) **EP 2 561 192 B1**
(45) Veröffentlichungstag und Bekanntmachung des Hinweises auf die Patenterteilung: **11.06.2014**
(21) Anmeldenummer: 11709000.1
(22) Anmeldetag: 04.03.2011
(51) Int. Cl.: F01M 11/03

(54) **ÖLFILTER-EINRICHTUNG**
OILFILTER
FILTRE À HUILE

(30) Priorität: 21.04.2010 DE 102010015677
(43) Veröffentlichungstag der Anmeldung: 27.02.2013
(73) Patentinhaber: Bayerische Motoren Werke Aktiengesellschaft, 80809 München (DE)
(72) Erfinder: THOMAS, Daniel, 85551 Kirchheim (DE); SCHUCK, Benjamin, 89250 Senden (DE); DÜCKER, Christian, 80993 München (DE)
(86) Internationale Anmeldenummer: PCT/EP2011/001069
(87) Internationale Veröffentlichungsnummer: WO 2011/131271

(56) Entgegenhaltungen:
- DE-A1- 2 932 453
- US-A- 2 524 336
- US-A- 5 421 223
- US-A- 5 546 979
- US-B1- 6 616 838

## Beschreibung

Die Erfindung betrifft eine Ölfilter-Einrichtung, insbesondere für eine Kraftfahrzeug-Brennkraftmaschine, umfassend ein Fitter-Eiement sowie einen Deckelbereich.

Ölfilter werden verwendet, um das Schmieröl von Kraftfahrzeug-Brennkraftmaschinen zu reinigen. Ein üblicher Ölfilter geht beispielsweise aus der DE 39. 03 675 A1 hervor. Dieser Ölfilter weist einen ringförmigen Filtereinsatz auf, der in einem topfförmigen Filtergehäuse angeordnet ist, umfasst eine Vielzahl von gesonderten Bauteilen und ist im Bereich der Brennkraftmaschinen-Peripherie angeordnet.

In regelmäßigen Zeitabständen muss das Schmieröl der Kraftfahrzeug-Brennkraftmaschine gewechselt werden. Dabei ist insbesondere bei Kraftfahrzeugen in der Regel auch der Filter-Einsatz zu wechseln. Bei einem üblichen Ölfilter, wie er aus der DE 39 03 675 A1 hervorgeht, wird der Filtereinsatz im Filtergehäuse gewechselt, während ein Ablassen des Öls an anderer Stelle, üblicherweise mittels einer Ölablassöffnung im Bereich einer Ölwanne, erfolgt. Eine solche übliche Ölablassvorrichtung für Ölwannen von Kraftfahrzeug-Brennkräftmaschinen geht aus der DE 1 835 652 U hervor.

Weiter ist aus dem US Patent US 6,616,838 eine Ölfilter-Einrichtung, insbesondere für eine Kraftfahrzeug-Brennkraftmaschine bekannt. Die Ölfilter-Einrichtung umfasst ein Filter-Element sowie einen Deckelbereich. Im Deckelbereich ist ein mittels eines zerstörbaren Einweg-Verschlusses verschlossener Ölablass vorgesehen.

Bei einem Ölwechsel sind demzufolge mehrere Arbeitsschritte an unterschiedlichen Orten auszuführen: Altes Öl ist an der Ölwanne abzulassen, im Bereich der Brennkraftmaschinen-Peripherie ist der Ölfilter zu wechseln, die Ölablassöffnung ist wieder zu schließen, wobei ein Verschlusselement zu reinigen und mit einem neuen Dichtmittel zu versehen ist, frisches Öl ist durch eine Öleinfüllöffnung einzufüllen. Damit verbunden sind ein beträchtlicher Bauraumaufwand, ein erhöhtes Gewicht, erhöhte Kosten sowie ein erhöhter Serviceaufwand.

Aufgabe der Erfindung ist es daher, eine eingangs genannte Ölfilter-Einrichtung bereit zu stellen, die weniger Bauraum beansprucht, deren Gewicht reduziert ist, die günstiger ist und die einen vereinfachten Ölwechsel ermöglicht.

Die Lösung der Aufgabe erfolgt mit einer Ölfilter-Einrichtung mit den Merkmalen des Anspruchs 1, indem im Deckelbereich der Ölfilter-Einrichtung ein mittels eines zerstörbaren Einweg-Verschlusses verschlossener Ölablass vorgesehen ist. Damit kann ein Ablassen alten Öls an der Ölfilter-Einrichtung selbst erfolgen, sodass die bei einem Ölwechsel erforderlichen Arbeitsschritte räumlich konzentriert ausgeführt werden können.

Besonders zu bevorzugende Ausführungen und Weiterbildungen der Erfindung sind Gegenstand der Unteransprüche.

Vorzugsweise sind bei der erfindungsgemäßen Ölfilter-Einrichtung der Deckelbereich und der Einweg-Verschluss einstückig als gemeinsames Bauteil ausgeführt und es ist zwischen Deckelbereich und Einweg-Verschluss eine Sollbruchstelle vorgesehen. Damit weist der Deckelbereich mit Ölablass und Einweg-Verschluss eine sehr einfache technische Gestalt auf und der Deckelbereich kann besonders kostengünstig hergestellt werden.

Sehr vorteilhaft ist es, wenn der Einweg-Verschluss eine erste Angriffsgeometrie zum Entfernen des Einweg-Verschlusses aufweist. Damit kann der Einvireg-Verschluss beispielsweise von Hand, gegebenenfalls unter Zuhilfenahme eines entsprechenden Werkzeugs, entfernt werden, wobei jedoch auch ein automatisiertes Entfernen möglich ist.

Bevorzugt ist es, wenn der Deckelbereich eine Verbindungs-Geometrie zur Verbindung der Ölfilter-Einrichtung mit einer korrespondierenden Verbindungs-Geometrie eines Ölreservoirs aufweist, sodass die Ölfilter-Einrichtung lösbar und zugleich öldicht mit dem Ölreservoir verbunden werden kann.

Als vorteilhaft wird es zudem angesehen, wenn der Deckelbereich der Ölfilter-Einrichtung eine zweite Angriffsgeometrie zum Einsetzen und/oder Entfernen der Ölfilter-Einrichtung aufweist. Damit kann die Ölfilter-Einrichtung beispielsweise von Hand, gegebenenfalls unter Zuhilfenahme eines entsprechenden Werkzeugs, eingesetzt und/oder entfernt werden, wobei jedoch auch ein automatisiertes Einsetzen und/oder Entfernen möglich ist.

Zweckmäßigerweise ist der Deckelbereich innenseitig zum Ölablass hin abgeschrägt, um beim Ablassen von altem Öl ein möglichst zügiges und vollständiges Ablaufen zu gewährleisten.

Einem besonders bevorzugten Ausführungsbeispiel zufolge weist die erfindungsgemäße Ölfilter-Einrichtung Bypass-Öffnungen zum Ablassen von altem Öl unter Umgehung des Filter-Elements auf. Damit wird erreicht, dass altes Öl beim Ablassen nicht das Filter-Element durchströmen muss.

Sehr günstig ist es, wenn der Deckelbereich axial innenseitig einen spitzhaubenartigen Bereich aufweist, der die Bypass-Öffnungen umfasst. Damit wird ebenfalls beim Ablassen von altem Öl ein möglichst zügiges und vollständiges Ablaufen unterstützt.

Nachfolgend sind besonders zu bevorzugende Ausführungsbeispiele der Erfindung unter Bezugnahme auf Figuren näher erläutert, dabei zeigen schematisch und beispielhaft
- Figur 1: eine Ölfilter-Einrichtung für eine Kraftfahrzeug-Brennkraftmaschine mit einem Filter-Element und einem Deckelbereich mit Ölablass und Einweg-Verschluss in isometrischer Ansicht von schräg oben,
- Figur 2: eine Ölfilter-Einrichtung für eine Kraftfahrzeug-Brennkraftmaschine mit einem Filter-Element und einem Deckelbereich mit Ölablass und Einweg-Verschluss in Schnittdarstellung und
- Figur 3: eine Ölfilter-Einrichtung für eine Kraftfahrzeug-Brennkraftmaschine mit einem Filter-Element und einem Deckelbereich mit Ölablass und Einweg-Verschluss in isometrischer Ansicht von schräg unten.

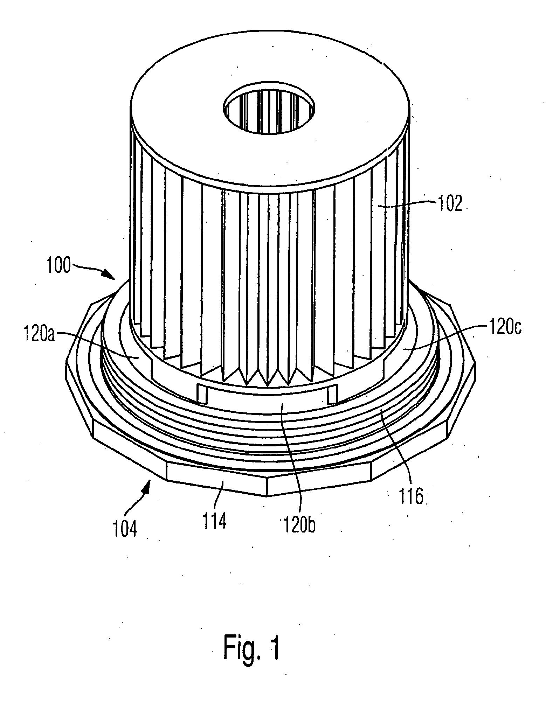

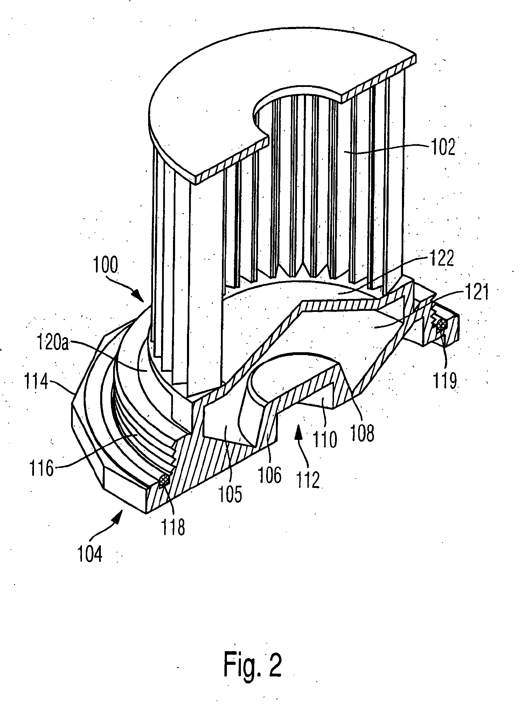

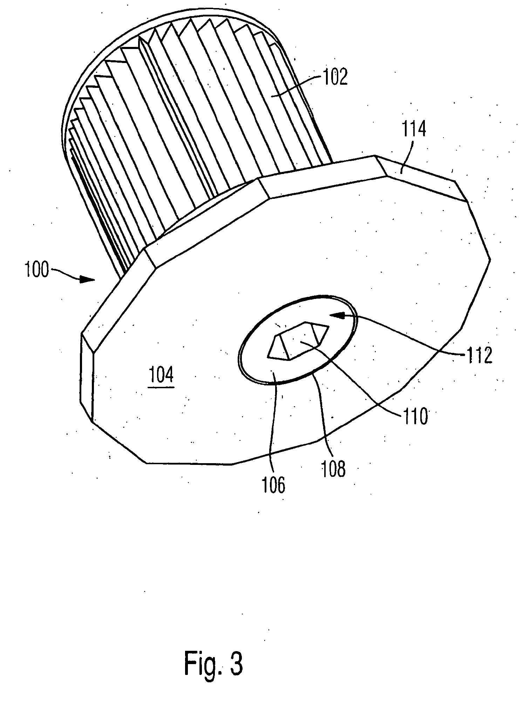

Figur 1 zeigt eine Ölfilter-Einrichtung 100 für eine Kraftfahrzeug-Brennkraftmaschine mit einem Filter-Element 102 und einem Deckelbereich 104 mit Ölablass 112 und Einweg-Verschluss 106 in isometrischer Ansicht von schräg oben, Figur 2 zeigt die Ölfilter-Einrichtung 100 in Schnittdarstellung, eine isometrische Ansicht von schräg unten ist in Figur 3 dargestellt.

In der Ölfilter-Einrichtung 100 sind das Filter-Element 102, der Deckelbereich 104 und der Ölablass 112 baulich gemeinsam ausgeführt.

Der Deckelbereich 104 der Ölfilter-Einrichtung 100 ist vorzugsweise aus Kunststoff hergestellt. Beispielsweise ist der Deckelbereich 104 ein Kunstsoff-Spritzgussteil aus einem thermoplastischen Kunststoff, gegebenenfalls Faserverstärkt. Alternativ kann der Deckelbereich 104 auch als Blechbauteil, beispielsweise aus einer Aluminiumlegierung, ausgeführt sein oder sowohl Metall als auch Kunststoff umfassen.

Der Deckelbereich 104 ist scheibenförmig ausgestaltet und weist einen nach innen ragenden Bund mit einer Verbindungs-Geometrie 116 zur Verbindung der Ölfilter-Einrichtung 100 mit einer korrespondierenden Verbindungs-Geometrie eines Ölreservoirs auf. Vorliegend ist die Verbindüngs-Geometrie 116 ein Außengewinde, mittels dem die Ölfilter-Einrichtung 100 in eine Öffnung eines Ölreservoirs, wie insbesondere Ölwanne, eingeschraubt werden kann, die ein korrespondierendes Innengewinde aufweist. Alternativ kann die Verbindungs-Geometrie 116 beispielsweise auch Teil eines Bajonettverschlusses sein. Radial außenseitig des Bunds mit der Verbindungs-Geometrie 116 ist zunächst eine Nut 118 zur Aufnahme einer Dichtung vorgesehen. Vorliegend dient die Nut 118 zur Aufnahme einer üblichen O-Ringdichtung 119, die zwischen Ölfilter-Einrichtung 100 und Ölreservoir öldicht dichtet, wenn die Ölfilter-Einrichtung 100 mit dem Ölreservoir verbunden ist. Weiter radial außenseitig weist der Deckelbereich 104 eine Angriffsgeometrie 114 für ein Werkzeug zum Einsetzen und/oder Entfernen der Ölfilter-Einrichtung 100 auf. Im dargestellten Ausführungsbeispiel ist die Angriffsgeometrie 114 als 12-Kant ausgeführt. Jedoch kann die Angriffsgeometrie 114 auch eine andere zweckmäßige Form aufweisen. Alternativ oder zusätzlich kann die Angriffsgeometrie 114 auch für eine manuelle Betätigung ohne Werkzeug geeignet sein. Beispielsweise kann die Angriffsgeometrie 114 eine Rändelung umfassen.

Axial innenseitig der Verbindungs-Geometrie 116 weist der Deckelbereich 104 einen spitzhaubenartigen Bereich 122 auf, der Bypass-Öffnungen 120a, 120b, 120c zum Ablassen von altem Öl unter Umgehung des Filter-Elements 102 umfasst. Der spitzhaubenartige Bereich 122 überdeckt eine Kammer 121, zu der die durch die Bypass-Öffnungen 120a, 120b, 120c einen Zugang bilden.

Radial innenseitig des Bunds mit der Verbindungs-Geometrie 116 und axial innerhalb der Bypass-Öffnungen 120a, 120b, 120c ist das Filter-Element 102 mit dem Deckelbereich 104 verbunden. Das Filter-Element 102 ist wie üblich hohlzylindrisch bzw. ringförmig ausgeführt und an seinem dem Deckelbereich 104 abgewandten Ende mit einem ringscheibenförmigen Kunststoffteil eingefasst. Alternativ kann dieses Bauteil auch in einem anderen geeigneten Werkstoff, z. B. Blech ausgeführt sein oder, wie heute auch schon Stand der Technik, ohne separatem Bauteil im Filterelement 102 integriert aus dem gleichen Material wie der Filter selbst (verdichtetes, öldichtes Filtervlies) ausgeführt sein. Vorliegend ist das Filter-Element 102 mit dem Deckelbereich 104 und dem ringscheibenförmigen Kunststoffteil fest vergossen oder verklebt. Radial innenseitig des Filter-Elements 102 ist im Deckelbereich 104 ein Ölablass 112 vorgesehen, der mit einem zerstörbaren Einweg-Verschluss 106 verschlossen ist. Der Ölablass 112 mit Einweg-Verschluss 106 ist vorliegend realisiert, indem der Deckelbereich 104 zwischen dem Verschluss 106 und dem weiteren Deckelbereich 104 eine Sollbruchstelle 108 aufweist.

Die Sollbruchstelle 108 ist so ausgeführt, dass der Verschluss 106 beim Betrieb des Kraftfahrzeugs sicher und dicht schließt, für einen Ölwechsel jedoch lösbar ist. Die Sollbruchstelle ist durch eine innen- und/oder außenseitig liegende Schwächung des Deckelbereichs 104 gebildet. Vorliegend ist zur Bildung der Sollbruchstelle 108 außenseitig eine ringnutförmige Schwächung des Deckelbereichs 104 vorgesehen. Innenseitig ist der Deckelbereich 104 mit einem trichterförmigen Bereich 105 versehen, der die Bildung der Sollbruchstelle 108 unterstützt und zugleich bei geöffnetem Ölablass 112 eine problemlose und vollständige Entleerung des Ölreservoirs gewährleistet. Der trichterförmige Bereich 105 erstreckt sich annähernd über die gesamte Dicke des Deckelbereichs 104. Der Ölablass 112 weist eine definierte Öffnungsfläche auf, sodass beim Ölablassen ein definierter Durchfluss gewährleistet ist. Die Sollbruchstelle 108 kann auch eine andere, beispielweise eine ovale oder polygone Form aufweisen.

Außenseitig weist der Einweg-Verschluss 106 eine Angriffsgeometrie 110 für ein Werkzeug zum Entfernen des Verschlusses 106 auf. Im dargestellten Ausführungsbeispiel ist diese Angriffsgeometrie 110 als Innensechskant ausgeführt. Jedoch kann die Angriffsgeometrie 110 auch eine andere zweckmäßige Form, wie Torx, Schlitz oder Kreuzschlitz, aufweisen. Alternativ oder zusätzlich kann die Angriffsgeometrie 110 auch für eine manuelle Betätigung ohne Werkzeug geeignet sein. Beispielsweise kann die Angriffsgeometrie 110 einen Abreißring umfassen.

Für einen Ölwechsel kann ein geeignetes Werkzeug an der Angriffsgeometrie 110 angesetzt und der Verschluss 106 herausgedreht oder -gebrochen werden, sodass durch die Bypass-Öffnungen 120a, 120b, 120c altes Öl in die Kammer 121 einlaufen und durch den Ölablass 112 ablaufen kann. Dabei wird ein vollständiges Ablaufen alten Öls durch die Abschrägung des den Ölablass 112 umgebenden Bereichs sowie durch die spitzhaubenartige Ausgestaltung des Bereichs 122 unterstützt.

Nachfolgend kann ein geeignetes Werkzeug an der Angriffsgeometrie 114 angesetzt und die Ölfilter-Einrichtung 100 vom Ölreservoir entfernt werden. Die alte Ölfilter-Einrichtung 100 wird entsorgt und es wird unter Verwendung des geeigneten Werkzeugs eine neue Ölfilter-Einrichtung 100 eingesetzt, deren Ölablass 112 mit einem Verschluss 106 verschlossen ist, das sauber und mit einer neuen Dichtung vorkonfektioniert ist. Abschließend wird neues Öl in das Ölreservoir eingefüllt.

Besonders vorteilhaft ist eine Verwendung der erfindungsgemäßen Ölfilter-Einrichtung 100, wenn das Filter-Element 102 der Saugseite einer Ölpumpe zugeordnet ist, da das Filter-Element 102 dann zusätzliche eine Schutzfunktion für die Ölpumpe übernehmen kann, sodass ein gesonderter Ansaugschutzfilter entfallen kann.

Mit der erfindungsgemäßen Ölfilter-Einrichtung 100 kann das bisher erforderliche Reinigen und wieder Einsetzen einer verölten Ölablassschraube mit neuer Dichtung entfallen.

## Patentansprüche

1. Ölfilter-Einrichtung (100), insbesondere für eine Kraftfahrzeug-Brennkraftmaschine, umfassend ein Filter-Element (102) sowie einen Deckelbereich (104), wobei im Deckelbereich (104) ein mittels eines zerstörbaren Einweg-Verschlusses (106) verschlossener Ölablass (112) vorgesehen ist, **dadurch gekennzeichnet, dass**
der Deckelbereich (104) und der Einweg-Verschluss (106) einstückig als gemeinsames Bauteil ausgeführt sind und zwischen Deckelbereich (104) und Einweg-Verschluss (106) eine Sollbruchstelle (108) vorgesehen ist.

2. Ölfilter-Einrichtung (100) nach Patentanspruch 1, **dadurch gekennzeichnet, dass** der Einweg-Verschluss (106) eine erste Angriffsgeometrie (110) zum Entfernen des Einweg-Verschlusses (106) aufweist.

3. Ölfilter-Einrichtung (100) nach einem der vorhergehenden Ansprüche, **dadurch gekennzeichnet, dass** der Deckelbereich (104) eine Verbindungs-Geometrie (116) zur Verbindung der Ölfilter-Einrichtung (100) mit einer korrespondierenden Verbindungs-Geometrie eines Ölreservoirs aufweist.

4. Ölfilter-Einrichtung (100) nach einem der vorhergehenden Ansprüche, **dadurch gekennzeichnet, dass** der Deckelbereich (104) eine zweite Angriffsgeometrie (114) zum Einsetzen und/oder Entfernen der Ölfilter-Einrichtung (100) aufweist.

5. Ölfilter-Einrichtung (100) nach einem der vorhergehenden Ansprüche, **dadurch gekennzeichnet, dass** der Deckelbereich (104) innenseitig zum Ölablass (112) hin abgeschrägt ist (105).

6. Ölfilter-Einrichtung (100) nach einem der vorhergehenden Ansprüche,
**gekennzeichnet durch** Bypass-Offnungen (120a, 120b, 120c) zum Ablassen von altem Öl unter Umgehung des Filter-Elements (102).

7. Ölfilter-Einrichtung (100) nach einem der vorhergehenden Ansprüche, **dadurch gekennzeichnet, dass** der Deckelbereich (104) axial innenseitig einen spitzhaubenartigen Bereich (122) aufweist, der die Bypass-Offnungen (120a, 120b, 120c) umfasst.

## Claims

1. An oil filter arrangement (100), especially for an internal combustion engine in a vehicle, comprising a filter element (102) and a cap region (104), wherein an oil outlet (112) closed by a destructible disposable closure (106) is provided in the cap region (104),
**characterised in that** the cap region (104) and the disposable closure (106) are in one piece and form a common component, and a set breaking place (108) is provided between the cap region (104) and the disposable closure (106).

2. An oil filter arrangement (100) according to claim 1, **characterised in that** the closure (106) has a first contact shape (110) for removing the closure (106).

3. An oil filter arrangement (100) according to any of the preceding claims, **characterised in that** the cap region (104) has a shape (116) for connecting the oil filter arrangement (100) to a corresponding shape on an oil reservoir.

4. An oil filter arrangement (100) according to any of the preceding claims, **characterised in that** the cap region (104) has a second contact shape (114) for inserting and/or removing the oil filter arrangement (100).

5. An oil filter arrangement (100) according to any of the preceding claims, **characterised in that** the cap region (104) tapers (105) on the inside towards the oil outlet (112).

6. An oil filter arrangement (100) according to any of the preceding claims, **characterised by** bypass openings (120a, 120b, 120c) for discharging used oil, bypassing the filter element (102).

7. An oil filter arrangement (100) according to any of the preceding claims, **characterised in that** on the inside the cap region (104) has an axial tapering hood-like region (122) surrounding the bypass openings (120a, 120b, 120c).

## Revendications

1. Dispositif de filtre à huile (100) en particulier destiné à un véhicule à moteur à combustion interne comprenant un élément de filtre (102) ainsi qu'une zone de couverture (104), dans laquelle est prévue une vidange d'huile (112) fermée au moyen d'un obturateur jetable (106), **caractérisé en ce que**
la zone de couverture (104) et l'obturation jetable (106) sont réalisés en une seule pièce sous la forme d'un élément commun, et entre la zone de couverture (104) et l'obturation jetable (106) il est prévu une ligne de rupture de consigne (108).

2. Dispositif de filtre à huile (100) conforme à la revendication 1, **caractérisé en ce que**
l'obturation jetable (106) comporte une première géométrie d'attaque (110) permettant son élimination.

3. Dispositif de filtre à huile (100) conforme à l'une des revendications précédentes,
**caractérisé en ce que**
la zone de couverture (104) comporte une géométrie de liaison (116) permettant de relier le dispositif de filtre à huile (100) avec une géométrie de liaison correspondante d'un réservoir à huile.

4. Dispositif de filtre à huile (100) conforme à l'une des revendications précédentes,
**caractérisé en ce que**
la zone de couverture (104) comporte une seconde géométrie d'attaque (114) permettant la mise en place et/ou l'élimination du dispositif de filtre à huile (100).

5. Dispositif de filtre à huile (100) conforme à l'une des revendications précédentes,
**caractérisé en ce que**
la zone de couverture (104) est biseautée (105) à sa partie interne vers la vidange d'huile (112).

6. Dispositif de filtre à huile (100) conforme à l'une des revendications précédentes,
**caractérisé par**
des ouvertures de dérivation (120a, 120b, 120c) permettant d'évacuer de l'huile usagée en contournant l'élément de filtre (102).

7. Dispositif de filtre à huile (100) conforme à l'une des revendications précédentes,
**caractérisé en ce que**
la zone de couverture (104) comporte sur sa face interne axiale une zone en forme de capuchon pointu (122) qui entoure les ouvertures de dérivation (120a, 120b, 120c).
